# EUROPÄISCHE PATENTSCHRIFT

(11) **EP 0 630 940 B1**
(45) Veröffentlichungstag und Bekanntmachung des Hinweises auf die Patenterteilung: **02.05.1997**
(21) Anmeldenummer: 94108857.7
(22) Anmeldetag: 09.06.1994
(51) Int. Cl.: C08L 27/12, C08L 51/08

(54) **Mischung aus Fluorkautschuk und Silicon/Acrylat-Kern/Mantel Kautschuk**
Blend of fluororubber and silicon/acryl-core/shell rubber
Mélange de caoutchouc fluoré et caoutchouc silicone/acrylice de type noyau-manteau

(30) Priorität: 22.06.1993 DE 4320633
(43) Veröffentlichungstag der Anmeldung: 28.12.1994
(73) Patentinhaber: BAYER AG, 51368 Leverkusen (DE)
(72) Erfinder: Langstein, Gerhard, Dr., D-51515 Kürten (DE); Krüger, Ralf, Dr., D-51061 Köln (DE); Piejko, Karl-Erwin, Dr., D-51467 Bergisch Gladbach (DE); Eisele, Ulrich, Dr., D-51375 Leverkusen (DE); Morbitzer, Leo, Dr., D-51061 Köln (DE)

(56) Entgegenhaltungen:
- PATENT ABSTRACTS OF JAPAN vol. 17, no. 167 (C-1043) & JP-A-04 328 147 (JAPAN SYNTH RUBBER CO)
- PATENT ABSTRACTS OF JAPAN vol. 17, no. 167 (C-1043) & JP-A-04 328 147

## Beschreibung

Die vorliegende Erfindung betrifft peroxidisch vulkanisierbare Mischungen aus Fluor- und Silicon/Acrylat-Kern/Mantel-Kautschuken.

Für Anwendungen im Hochtemperaturbereich (Dichtungen, Versiegelungen, Auskleidungen etc.) werden besonders bei Anwesenheit von aggressiven Medien auch in Kombination mit Öl oder Kraftstoff, bevorzugt Fluorelastomere (FKM) auf der Basis von Vinylidenfluorid, Hexafluorpropen und gegebenenfalls Tetrafluorethylen, eingesetzt. Sie liefern Vulkanisate mit hoher Hitze-, Chemikalien-, Ozon- und Witterungsbeständigkeit sowie geringer Öl- und Kraftstoffquellung.

Wegen dieser Eigenschaften sind mit Fluorkautschuken Anwendungsgebiete erschlossen worden, in die bisher kein anderer Kautschuktyp eindringen konnte. Ein wesentlicher Nachteil bei den FKM ist jedoch ihre außerordentlich schlechte Tieftemperaturflexibilität. Beim Unterschreiten der Glastemperaturen, die sich bei den Vulkanisaten der handelsüblichen Fluorelastomeren auf der Basis von VDF/HFP/TFE zwischen 0 und -15°C bewegen, versagen FKM-Fertigteile sehr schnell unter mechanischer Belastung und zeigen extrem sprödes Verhalten.

Gleichzeitig stehen mit den Polydimethylsiloxanen Polymere zur Verfügung, die eine extrem niedrige T_{g} von -123°C besitzen und sich durch geringe Heißluftalterung sowie hohe Ozonbeständigkeit auszeichnen und außerdem wesentlich preiswerter als die FKM sind. Diese Kautschukklasse zeigt wiederum Nachteile bei der Lösungsmittelbeständigkeit und den mechanischen Eigenschaften. Selbst die teureren Fluorsilicone (Trifluorpropyl-Substituenten) mit einer Glastemperatur von -68°C erreichen in heißen aggressiven Medien nicht die Beständigkeiten von FKM.

Ziel vieler Bemühungen war deshalb die Kombination von Fluor- und Siliconkautschuken. Die naheliegende Kombination in Form eines simplen Blends scheitert jedoch an der Unverträglichkeit beider Polymerklassen. Die fehlende Kompatibilität zeigt sich z.B. auch bei den JP-A 4 328 147 beschriebenen thermoplastischen Harzzusammensetzungen, die aus 5 bis 95 Gew.-% eines thermoplastischen Harzes, das durch Polymerisation eines Vinylgruppen-haltigen Monomers in Gegenwart eines Polysiloxanharzes mit einem Teilchendurchmesser von 5 000 Å hergestellt wurde und 5 bis 95 Gew.-% eines Vinylidenfluoridharzes sowie 0 bis 90 Gew.-% von (Meth)acrylatester besteht.

Ein mehrphasiges Blendsystem könnte synergistische Vorteile bei bestimmten Anwendungseigenschaften bringen, z.B. Verbesserung der Kältezähigkeit unter Erhalt der vorteilhaften Quell- und Alterungseigenschaften des FKM, wenn es gelänge, die FKM- und Siliconphase in einer definierten Morphologie herzustellen und diese anschließend durch Vernetzung zu fixieren. Versuche, solche Systeme herzustellen, scheitern in der Regel daran, daß man entweder beim Mischen der beiden Partner, die Vernetzergruppen ähnlicher Reaktivität enthalten, keine einheitliche Morphologie erhält oder keine Phasenankopplung stattfindet, weil unterschiedliche Vernetzungscharakteristiken vorliegen und die Vernetzung deshalb bevorzugt innerhalb der reinen Phasen A und B stattfindet. Die Covulkanisation findet dann nur in untergeordnetem Maße statt.

Aufgabe der vorliegenden Erfindung ist es, einen radikalisch vulkanisierbaren Blend aus einem Fluorkautschuk und einem Siliconkautschuk mit einer definierten Morphologie herzustellen. Dabei soll der Siliconkautschuk feindispers in einer Matrix des FKM verteilt sein und während einer nachfolgenden Vernetzung mit diesem fest verbunden werden.

Diese Aufgabe wird erfindungsgemäß dadurch gelöst, daß Siliconkautschuke in Form von Teilchen mit einer definierten Teilchengröße in einer wäßrigen Dispersion mit einer Acrylatauflage bepfropft werden und die resultierenden Silicon/Acrylat-Kern/Mantel-Kautschuke mit Fluorkautschuken, die mit der Acrylatauflage zumindest teilverträglich und (bevorzugt radikalisch) covernetzbar sind, vermischt. Überraschenderweise bleibt bei der erfindungsgemäßen Zusammensetzung und Verfahrensweise die vorgegebene Morphologie erhalten und es findet eine Ankopplung zwischen der Silicon- und der Fluorkautschukphase statt, was durch gute mechanische Eigenschaften (Erhalt der hohen Dehnung und Festigkeitswerte der Ausgangskomponenten) oberhalb der FKM-T_{g} und eine verbesserte Kältezähigkeit unterhalb der Glastemperatur der FKM-Komponente im Vergleich zum reinen FKM bemerkbar macht.

Gegenstand der vorliegenden Erfindung sind demgemäß radikalisch vernetzbare Mischungen aus
a) 98 bis 35 Gew.-Teilen eines radikalisch vulkanisierbaren Fluorkautschuks, der Einheiten von Vinylidenfluorid und/oder Tetrafluorethylen und mindestens einem weiteren damit copolymerisierbaren Fluorolefin enthält, und
b) 2 bis 65 Gew.-Teilen eines Silicon/Acrylat-Kern/Mantel-Kautschuks mit einem Gelgehalt von >70 % und mit einem Siliconanteil bl) von 50 bis 95 Gew.-Teilen und einem Acrylatanteil b2) von 5 bis 50 Gew.-Teilen, wobei der Silicon/Acrylat-Kern/Mantel-Kautschuk teilchenförmig benetzte Siliconkautschukteilchen eines mittleren Durchmessers von 0,1 bis 3 µm enthält, auf die mindestens ein Acrylatkautschuk aufgepfropft ist.

Der Silicon/Acrylat-Kern/Mantel-Kautschuk ist dadurch gekennzeichnet, daß er vorzugsweise aus einem mindestens teilweise vernetzten Kern, bestehend aus Polyorganosiloxan und einer darauf gepfropften Hülle (Mantel), bestehend aus einem mindestens teilweise vernetzten Acrylatcopolymeren, welches zumindest teilverträglich mit dem als Blendpartner einzusetzenden FKM ist, besteht und Teilchendurchmesser von 60 bis 800 nm aufweist.

Ein weiterer Gegenstand der Erfindung ist ein Verfahren zur Herstellung der obengenannten Mischung, das dadurch gekennzeichnet ist, daß der Fluorkautschuk (A) und der Silicon/Acrylat-Kern/Mantel-Kautschuk (B) in Form ihrer wäßrigen Dispersionen miteinander vermischt und aus der resultierenden Mischemulsion gemeinsam gefällt oder in dieser Form direkt als Beschichtungskomponente eingesetzt und jeweils in nachfolgenden Verarbeitungsschritten vernetzt werden.

Als peroxidisch vernetzbare Fluorelastomere (A) sind solche geeignet, die Einheiten von VDF und/oder TFE und mindestens einem weiteren damit copolymerisierbaren Fluorolefin enthalten. Das weitere Fluorolefin kann CTFE, HFP, PFP, HFIB, PFAVE usw. sein. Daneben kann das Fluorelastomer Einheiten nicht fluorhaltiger Monomere wie Propen, Ethylen, Vinylalkylether und Vinylester enthalten. Solche Fluorelastomere ergebende Monomerkombinationen sind grundsätzlich bekannt und werden z.B. in DE-A 39 25 743 und DE-A 41 14 598 beschrieben. Daneben muß der Fluorkautschuk Reaktivstellen für die peroxidische Vernetzung besitzen. Dies können sowohl Brom- oder Iod- oder Brom- und Iodsubstituenten, als auch seitenständige Doppelbindungen sein. Die Einführung solcher Reaktivstellen in das Fluorelastomer geschieht im Falle der Brom- und Iodsubstituenten nach bekannten Verfahren, indem man entweder brom- und/oder iodhaltige Vinylverbindungen in kleinen Mengen mit den Fluormonomeren copolymerisiert; siehe z.B. US-A 3.351.619, US-A 4.035.565, US-A 4.214.060, DE-A 3.715.210, oder indem man in Gegenwart von gesättigten Iod oder Brom und Iod enthaltenden Verbindungen polymerisiert, z.B. DE-A 2 815 187, DE-A 3 710 818 oder beide Möglichkeiten miteinander kombiniert, z.B. EP-A 407 937 oder US-A 4 948 852. Einen Fluorkautschuk mit seitenständigen Doppelbindungen erhält man durch Copolymerisation von Fluormonomeren mit kleinen Mengen von geeigneten Monomeren, die mindestens zwei olefinische Doppelbindungen besitzen, wie Alkenylisocyanurate, Alkenylcyanurate und/oder nicht konjugierte Diene; siehe DE-A 4 038 588 und DE-A 4 114 598.

Silicon/Acrylat-Kern/Mantel-Kautschuke (B) im Sinne der Erfindung enthalten teilchenförmige, hochvernetzte Siliconkautschukteilchen eines mittleren Durchmessers (d₅₀) von 0,1 bis 3 µm, insbesondere von 0,1 bis 1 µm, und Gelgehalten von größer als 60 Gew.-%, insbesondere größer als 80 Gew.-%. Der auf die Siliconkautschukteilchen aufgepfropfte Acrylatkautschuk liegt in den Silicon/Acrylat-Kern/Mantelkautschuken bevorzugt in Mengen von 50 Gew.-% oder weniger vor, insbesondere in Mengen von 30 bis 5 Gew.-%. Die Pfropfkautschuke (B) besitzen Gelgehalte >70 Gew.-%, insbesondere >85 Gew.-%. Der Acrylatkautschukanteil der Silicon/Acrylat-Kern/Mantel-Kautschuke wird auf die Siliconkautschukteilchen aufpolymerisiert; dabei können sich bilden: Pfropfpolymerisate im Sinne kovalenter Verbindungen von Silicon-und Acrylatkautschuk, vernetzte, die Siliconkautschukteilchen mehr oder weniger mechanisch umhüllende Acrylatkautschukanteile sowie gegebenenfalls kleine Mengen löslicher Acrylatkautschuke. Als Silicon/Acrylat-Kern/Mantel-Kautschuke werden im Sinne der Erfindung die Reaktionsprodukte bezeichnet, die durch Acrylatpolymerisation in Gegenwart von Siliconkautschukteilchen erhalten werden, unabhängig vom tatsächlichen Ausmaß der Pfropfung. Die Siliconkautschukgrundlage ist vorzugsweise ein vernetzter Siliconkautschuk und enthält Einheiten der Formeln (I) bis (IV)

R₂SiO_{2/2} (I)

RSiO_{3/2} (II)

R₃SiO_{1/2} (III)

SiO_{4/2} (IV),

in welchen
- R: einen einwertigen organischen Rest darstellt.

Als einwertige organische Reste sind C₁-C₄₀-Reste geeignet, beispielsweise Alkylgruppen, vorzugsweise C₁-C₁₀-Alkyl, Arylgruppen, vorzugsweise C₆-C₂₄-Aryl, Alkylarylgruppen, vorzugsweise C₇-C₃₀-Alkylaryl, Arylalkylgruppen, vorzugsweise C₇-C₃₀-Aralkyl, C₁-C₂₀-Alkoxy, C₁C₂₀-Thioalkyl, ungesättigte C₂-C₂₀-Reste usw.

Besonders bevorzugt seien genannt: Methyl, Ethyl, tert.-Butyl, Phenyl, Methylphenyl, Bisphenyl, Phenylmethyl usw. Weiterhin seien genannt C₁-C₁₀-Alkoxy-Reste, radikalisch angreifbare Gruppen wie Vinyl- oder Mercaptopropylreste.

Bevorzugt sind mindestens 80 % aller Reste R Methyl; insbesondere bevorzugt sind Kombinationen aus Methyl und Ethyl.

Auf 100 Mol Einheiten der Formel R₂SiO kommen vorzugsweise 0 bis 10 Mol Einheiten der Formel RSiO_{3/2}, 0 bis 1,5 Mol Einheiten R₃SiO_{1/2} und 0 bis 3 Mol Einheiten der Formel SiO₂.

Bevorzugte Siliconkautschuke enthalten eingebaute Einheiten radikalisch angreifbarer Gruppen. Diese sind zur Radikaladdition oder Übertragungsreaktion befähigt. Solche Gruppen sind vorzugsweise Vinyl-, Allyl-, Chloralkyl-, Mercaptogruppen, vorzugsweise in Mengen von 2 bis 10 Mol-%, bezogen auf die Reste R.

Das auf den Kern a) aufgepfropfte Kautschukpolymerisat b) stellt einen teil- bis hochvernetzten Acrylatkautschuk dar und ist ein Polymerisat auf 100 bis 60 Gew.-% Alkylacrylat, 60 bis 0 Gew.-% anderen, mit Alkylacrylat copolymerisierbaren Monomeren und wenn nötig 0,1 bis 10 Gew.-%, bezogen auf die Summe aus Alkylacrylat und anderen Monomeren, eines vernetzenden Monomeren mit wenigstens zwei Vinyl- und/oder Allylgruppen im Molekül.

Alkylacrylate im Sinne der Erfindung sind C₄-C₁₄-Alkylacrylate, wie Methyl-, Ethyl-, Butyl-, Octyl-, 2-Ethylhexylacrylat, Chlorethylacrylat, Benzylacrylat, Phenethylacrylat, insbesondere C₁-C₆-Alkylester, bevorzugt Butylacrylat; mit den Alkylacrylaten copolymerisierbare Monomere sind bevorzugt Styrol, α-Methylstyrol, Halogenstyrol, Methoxystyrol, Acrylnitril, Methacrylnitril, C₁-C₈-Alkylmethacrylate, die im Alkylrest gegebenenfalls durch funktionelle Gruppen wie Hydroxyl-, Epoxid-, Amingruppen substituiert sein können, beispielsweise Methyl-, Cyclohexylmethacrylat, Glycidylmethacrylat, Hydroxyethyl-, Hydroxypropylmethacrylat, (Meth)Acrylsäure, Maleinsäure(ester), Fumarsäure, Itaconsäure, (Meth)Acrylamide, Vinylacetat, Vinylpropionat oder N-Methylolverbindungen der (Meth)Acrylamide. Vernetzende Monomere im Sinne der Erfindung sind Ester von ungesättigten Carbonsäuren mit einem Polyol (vorzugsweise 2 bis 20 Kohlenstoffatomen in der Estergruppe), wie Ethylenglykoldimethacrylat, Ester einer mehrfach funktionellen Carbonsäure mit einem ungesättigten Alkohol (vorzugsweise 8 bis 30 Kohlenstoffatomen im Esterrest), wie Triallylcyanurat, Triallylisocyanurat; Divinylverbindungen wie Divinylbenzol; Ester ungesättigter Carbonsäuren mit ungesättigten Alkoholen (bevorzugt 6 bis 12 Kohlenstoffatomen im Esterrest) wie Allylmethacrylat; Phosphorsäureester, beispielsweise Triallylphosphat und 1,3,5-Triacrylolylhexahydro-s-triazin. Besonders bevorzugte polyfunktionelle Monomere sind Triallylcyanurat, Triallylisocyanurat, Triallylphosphat, Allylmethacrylat.

Die Silicon/Acrylat-Kern/Mantel-Kautschuke im Sinne der Erfindung sind in wäßriger Emulsion wie folgt herstellbar: zunächst wird in einer ersten Stufe durch Emulsionspolymerisation eines Siliconoligomeren der Siliconkautschuk, also der Kern a), hergestellt:

Die Herstellung einer Emulsion eines langkettigen Siliconöls mit OH-Endgruppen durch Emulsionspolymerisation ist bekannt. Beispielhaft wird hierzu auf die US-A 2 891 910 sowie auf die GB-A 1 024 024 verwiesen. Besonders bevorzugt ist, in Gegenwart einer Alkylbenzolsulfonsäure in Emulsion zu polymerisieren, da hier Emulgator und Polymerisationskatalysator in einem vorliegen. Nach der Polymerisation wird die Säure neutralisiert.

Anstelle der Alkylbenzolsulfonsäuren können auch n-Alkylsulfonsäuren eingesetzt werden. Es ist möglich, neben der katalytisch und emulgierend wirksamen Sulfonsäure zusätzlich andere Emulgiermittel als Co-Emulgatoren einzusetzen.

Co-Emulgatoren können nichtionisch oder anionisch sein. Als anionische Co-Emulgatoren kommen insbesondere Salze der obengenannten n-Alkyl- oder Alkylbenzolsulfonsäuren in Frage. Nichtionische Co-Emulgatoren sind Polyoxyethylenderivate von Fettalkoholen und Fettsäuren.

Im allgemeinen haben Siliconöle, die durch Emulsionspolymerisation in Anwesenheit von nichtionischen Co-Emulgatoren entstanden sind, ein niedrigeres Molekulargewicht als solche, die ohne Co-Emulgator hergestellt wurden. Das Molekulargewicht des bei der Emulsionspolymerisation entstehenden Siliconöls mit OH-Endgruppen kann auch über die Temperatur bei der Gleichgewichtsbildung zwischen Siloxan, Wasser und dem durch Ringöffnung des Siloxans zunächst gebildeten Silanol beeinflußt werden. Radikalisch angreifbare Gruppen können in das bevorzugte Siliconpolymer durch Mitverwendung entsprechender Siloxanoligomerer eingebaut werden. Hierbei geeignete Siloxanoligomere sind z.B. Tetramethyltetravinylcyclotetrasiloxan, γ-Mercaptopropylmethyldimethoxysilan und dessen Hydrolysat.

Solche "funktionellen" Oligomere werden dem Basisoligomer, z.B. Octamethylcyclotetrasiloxan, in den erforderlichen Mengen zugefügt.

Analog kann auch der Einbau längerkettiger Alkylreste R, z.B. Ethyl-, Propyl- und der Einbau von Phenylgruppen erreicht werden. Der Siliconkautschuk muß wenigstens teilweise vernetzt sein.

Eine ausreichende Vernetzung kann schon stattfinden, wenn die bevorzugt vorhandenen Vinyl- und Mercaptopropylgruppen bei der Emulsionspolymerisation der Siloxanoligomeren miteinander reagieren. Dann ist die Zugabe eines externen Vernetzers nicht erforderlich, jedoch kann ein vernetzendes Silan zugefügt werden, um den Vernetzungsgrad des Siliconkautschukes zu erhöhen.

Verzweigungen oder Vernetzungen können durch Zugabe von z.B. Tetraethoxysilan oder eines Silans der allgemeinen Formel RSiX₃ bzw. RX₄ (wobei X eine hydrolysierbare Gruppe, insbesondere den Alkoxyrest darstellt) eingebaut werden. R hat die im vorhergehenden beschriebene Bedeutung.

Bevorzugt sind R = Methyl, R = Ethyl und R = Phenyl. Insbesondere bevorzugt sind neben Tetraethoxysilan Methyltrimethoxysilan oder Phenyltrimethoxysilan.

In einer zweiten Stufe werden dann die den Acrylatkautschuk b) bildenden Monomeren (Alkylacrylat, gegebenenfalls Vernetzungsmonomere und gegebenenfalls weitere Monomere) in Gegenwart der Siliconkautschukemulsion der ersten Stufe pfropfpolymerisiert. Bei dieser Pfropfpolymerisation soll die Bildung neuer Teilchen möglichst unterbunden werden. Ein Emulsionsstabilisator muß in zur Oberflächenbedeckung der Teilchen erfoderlichen Menge vorhanden sein. Die Pfropfpolymerisation wird vorzugsweise im Temperaturbereich von 30 bis 90°C, insbesondere von 50 bis 80°C, durchgeführt und mit bekannten Radikalinitiatoren initiiert, beispielsweise Azoinitiatoren, Peroxiden, Perestern, Persulfaten, Perphosphaten oder durch Redoxinitiatorsysteme. Bevorzugt werden wasserlösliche anorganische Peroxidisulfate und -phosphate. Nach der Pfropfpolymerisation von b) auf die Siliconkautschukteilchen a) fallen stabile wäßrige Emulsionen der Siliconkautschuk/Acrylatkautschukteilchen an; üblicherweise mit Polymerfeststoffgehalten im Bereich von 20 bis 50 Gew.-%.

Die so hergestellten Pfropfpolymerisate können nach bekannten Verfahren aufgearbeitet werden, z.B. durch Koagulation der Latices mit Elektrolyten (Salze, Säuren oder Gemische davon). Sie können anschließend gereinigt und getrocknet werden.

Die erfindungsgemäße Mischungsbildung erfolgt vorzugsweise durch Mischen der wäßrigen Dispersion des Fluorkautschuks (A) mit der wäßrigen Dispersion des Silicon/Acrylat-Kern/Mantel-Kautschuks (B), gegebenenfalls unter Zusatz von weiteren Verarbeitungshilfsmitteln, Additiven etc. Diese Mischung der wäßrigen Dispersionen wird entweder in dieser Form direkt, z.B. als Beschichtungskomponente oder als Additiv für Beschichtungskomponenten, eingesetzt oder gefällt. Andere Verfahrensweisen wie das Mischen der einzelnen koagulierten trockenen Festkautschuke an einem Walzenstuhl oder in Innenknetern, durch Extrusion etc., sind möglich.

Die erfindungsgemäßen Kautschukmischungen lassen sich nach üblichen Methoden radikalisch vernetzen. Der Radikalstart kann durch energiereiche Strahlung oder thermisch in Gegenwart von Radikalstartern eingeleitet werden. Als radikalische Initiatoren dienen vorzugsweise Peroxide, die bei Temperaturen oberhalb 100°C Halbwertszeiten der Zersetzung von mindestens 5 min aufweisen, wie beispielsweise Dibenzoylperoxid, t-Butylperoxybenzol, Bis-(t-butylperoxyisopropyl)-benzol, 2,5-Bis-(t-butylperoxy)-2,5-dimethylhexan oder 2,5-Bis-(t-butylperoxy)-2,5-dimethylhexin-(3). Die Peroxide werden bevorzugt eingesetzt in Mengen von 0,5 bis 10 Gew.-Teilen, bevorzugt 1 bis 5 Gew.-Teilen, jeweils bezogen auf 100 Gew.-Teile Polymermischung.

Weiterhin kann die vernetzbare Mischung als Säureakzeptor dienende Oxide oder Hydroxide von Metallen wie Magnesium, Calcium, Blei, Zink, Barium usw. oder einem basischen Salz mit einem organischen Säurerest, wie Natriumstearat, Magnesiumoxalat oder Carbonate oder basisches Bleiphosphat usw. bzw. Kombinationen mehrerer von ihnen in Anteilen von nicht mehr als 15 Gew.-Teilen, bezogen auf 100 Gew.-Teilen Polymer, enthalten.

Die Zugabe von weiteren bekannten Füllstoffen, Verstärkungsmitteln, Weichmachern, Schmierstoffen, Verarbeitungshilfsstoffen, Pigmenten etc. ist möglich, wobei sich die Füllbarkeit der erfindungsgemäßen Kautschukmischung gegenüber derjenigen des reinen Fluorkautschuks prinzipiell erhöht.

Eine Einarbeitung der vorgenannten Mischungsbestandteile in die erfindungsgemäße Kautschukmischung geschieht ebenso nach den herkömmlichen Methoden der Mischungsbildung. So können die erfindungsgemäßen Mischungen, die gummielastische Formkörper ergeben sollen, beispielsweise auf der Walze oder im Kneter zu Vulkanisationsmischungen verarbeitet werden, die anschließend in bekannter Weise bei erhöhten Temperaturen und unter Druck in formgebenden Vorrichtungen vulkanisiert und nachfolgend zur Einstellung der Endeigenschaften drucklos im Umluftofen nachvulkanisiert werden.

Eine Verarbeitung in Lösung oder Schmelze ist ebenso möglich, wobei nach der Formgebung bei erhöhten Temperaturen die Trocknung und Vernetzung in einem Schritt erfolgen können, wenn man etwa Formkörper in Form von Folien, Filmen, Fasern oder kompakten Formkörpern herstellt. Eine gegebenenfalls mit Lösungsmittel hergestellte flüssige Zusammensetzung eignet sich in hervorragender Weise für die Anwendung in Beschichtungen oder Dichtungsmassen.

Für Beschichtungszusammensetzungen sind die oben bereits erwähnten wäßrigen Mischemulsionen mit den entsprechenden Zusätzen ebenfalls direkt zum Vergießen einsetzbar und können anschließend getrocknet und gehärtet werden.

Die Härtung kann gegebenenfalls auch durch UV- oder energiereichere Strahlung ohne Notwendigkeit einer thermischen Behandlung erfolgen.

Die Erfindung wird anhand der nachfolgenden Beispiele näher erläutert:

### Beispiel 1a

### Herstellung einer Fluorkautschukemulsion

In einem 40 l-Autoklaven wurden in 15 000 ml entionisiertes Wasser vorgelegt. Darin wurden 54 g Lithiumperfluoroctylsulfonat und 90 g Kaliumperoxidisulfat gelöst. Diese Lösung zeigt einen pH-Wert von 11. Dann wurde der geschlossene Autoklav dreimal jeweils mit einem Stickstoffdruck von 10 bar beaufschlagt und anschließend auf Normaldruck entspannt. In den Autoklaven wurden 4230 g Hexafluorpropen und 2938 g Vinylidenfluorid sowie 3 g Perfluorbutyliodid und 24 ml einer Lösung (= Lösung 1) aus 13 g Triallylisocyanurat in Essigsäuremethylester gegeben und das Reaktionsgemisch unter Rühren auf 50°C erwärmt. Nach Erreichen dieser Temperatur betrug der Autoklaveninnendruck 35 bar. Die Polymerisation wurde eingeleitet durch die kontinuierliche Zugabe von 120 ml pro Stunde einer wäßrigen Lösung (= Lösung 2), die Triethanolamin in einer Konzentration von 75 g/l enthielt. Parallel dazu wurde mit der kontinuierlichen Zugabe von 30 ml/h Lösung 1 begonnen. Nach 90 min wurde die Dosierung von Lösung 2 auf 90 ml/h reduziert. Während der Polymerisation, die sich nach 20 min durch beginnende Druckabnahme bemerkbar machte, wurde zur Aufrechterhaltung des Anfangsdrucks innerhalb von 80 min ein Monomergemisch bestehend aus 1430 g Vinylidenfluorid und 970 g Hexafluorpropen kontinuierlich nachgedrückt. Zur Beendigung der Polymerisation wurde der Autoklavinhalt abgekühlt und das nicht umgesetzte Gasgemisch kondensiert und zurückgewonnen. Es wurde eine koagulatfreie wäßrige Emulsion, die einen pH-Wert von 4,9 bei einem Feststoffgehalt von 19 % aufwies, erhalten. Die Emulsion wurde in dieser Form direkt für die Herstellung der Mischungen entsprechend den Beispielen 1d bis 9 eingesetzt.

### Vergleichsbeispiel

Die Emulsion gemäß Beispiel 1a wurde mit verdünnter Schwefelsäure auf einen pH-Wert von ca. 2 angesäuert und mit einer 4 %igen wäßrigen Magnesiumsulfatlösung (3500 ml auf 500 g Festkautschuk) gefällt. Das Produkt wurde mit Wasser gewaschen und dann getrocknet, wobei man ein kautschukartiges Copolymer erhielt, das Vinylidenfluorid, Hexafluorpropen und Triallylisocyanurat sowie als Endgruppen eingebautes Iod enthält.

Das Copolymer ist in Lösungsmitteln wie Dimethylformamid, Dimethylacetamid, Aceton, Methylethylketon und Tetrahydrofuran löslich. Das molare Verhältnis von Vinylidenfluorid zu Hexafluorpropen im Copolymeren wurde durch ¹⁹F-Kernresonanz-Spektroskopie bestimmt und beträgt 81:19. Mittels Stickstoff-Elementaranalyse wurde ein Gehalt an einpolymerisiertem TAiC von 0,6 Gew.-% gefunden. Durch Iod-Elementanalyse wurde ein Iodgehalt von <100 ppm gefunden. Der Mooneywert ML₄ (100°C) des Rohpolymeren beträgt 150.

### Beispiel 1b

### Herstellung der Silikonkautschukgrundlage

38,4 Gew.-Teile Octamethylcyclotetrasiloxan, 1,2 Gew.-Teile Tetramethyltetravinylcyclotetrasiloxan und 1 Gew.-Teil γ-Mercaptopropylmethyldimethoxysilan werden miteinander verrührt. 0,5 Gew.-Teile Dodecylbenzolsulfonsäure werden zugefügt, anschließend 58,4 Gew.-Teile Wasser innerhalb 1 h zudosiert. Dabei wird intensiv gerührt. Die Voremulsion wird mit Hilfe einer Hochdruckemulgiermaschine zweimal bei 200 bar homogenisiert. Man gibt weitere 0,5 Gew.-Teile Dodecylbenzolsulfonsäure zu.

Die Emulsion wird 2 h bei 85°C und anschließend 36 h bei Raumtemperatur gerührt. Neutralisiert wird mit Hilfe 1N-NaOH. Es resultieren 100 Gew.-Teile einer stabilen Emulsion mit einem Feststoffgehalt von ca. 37 % (bestimmt nach DIN 53 182). Die Teilchengröße beträgt 285 nm (Mittelwert d₅₀). Der Gelgehalt des Polymers beträgt 83 Gew.-% (in Toluol gemessen).

### Beispiel 1c

### Herstellung der Silicon/Acrylat-Kern/Mantel-Kautschuk-Dispersion

In einem Reaktor werden unter leichtem Stickstoffstrom 1960 Gew.-Teile der Siliconemulsion aus Beispiel 1b und 115 Gew.-Teile Wasser vorgelegt und auf 70°C erwärmt. Dazu fügt man eine Lösung aus 2 Gew.-Teilen Kaliumperoxodisulfat und 80 Gew.-Teilen Wasser. Bei 70°C werden anschließend die folgende Zuläufe gleichmäßig innerhalb 5 h zudosiert:
- Zulauf 1:: 310 Gew.-Teile n-Butylacrylat 0,9 Gew.-Teile Triallylcyanurat
- Zulauf 2:: 6,5 Gew.-Teile Natriumsalz von C₁₄-C₁₈-Alkylsulfonsäuren 400 Gew.-Teile Wasser.

Nach Beenden der Zudosierung wird 4 h bei 70°C nachgerührt. Es wird ein Latex mit einem Feststoffgehalt von 36 % erhalten.

### Beispiel 1d

### Herstellung der Kautschukmischung

Die im Beispiel 1a erhaltene koagulatfreie Fluorkautschukemulsion und die im Beispiel 1c erhaltene Silicon/Acrylat-Kern/Mantel-Kautschuk-Emulsion werden im Verhältnis 90 Gew.-Teile Fluorkautschuk: 10 Gew.-Teile Silicon/Acrylat-Kautschuk (jeweils bezogen auf Polymerfeststoffgehalt) vermischt. Der Silicon/Acrylat-Kern/Mantel-Kautschuk besteht zu 70 Gew.-Teilen aus Silicon-Kautschuk entsprechend dem Beispiel 1b und zu 30 Gew.-Teilen aus Acrylat-Kautschuk gemäß Beispiel 1c.

Dazu werden 615,31 g Fluorkautschukemulsion (Feststoffgehalt: 21,94 %) mit 49,31 g Silicon/Acrylat-Kern/Mantel-Kautschukemulsion (Feststoffgehalt: 35,45 %) gut verrührt.

Anschließend wird mit verdünnter Schwefelsäure auf einen pH-Wert von etwa 2 angesäuert und mit einer 4 %igen wäßrigen Magnesiumsulfatlösung (0,2 g MgSO₄ in 5 g H₂O pro g Festkautschuk) gefällt. Der Feststoff wird abgetrennt, mit Wasser gewaschen und getrocknet.

### Beispiel 2

Es wird wie im Beispiel 1d verfahren, mit dem Unterschied, daß der Fluorkautschuk und der Silicon/Acrylat-Kern/Mantel-Kautschuk im Verhältnis 60 Gew.-Teile : 40 Gew.-Teile (bezogen auf Polymerfeststoffgehalt) vermischt werden. Dazu werden 410 g Fluorkautschukemulsion (Feststoffgehalt 21,94 %) und 169,25 g Silicon-Acrylat-Kern-Mantel-Kautschukemulsion (Feststoffgehalt: 35,45 %) gut verrührt.

### Beispiel 3

Es wird wie im Beispiel 1d verfahren, mit dem Unterschied, daß der Fluorkautschuk und der Silicon/Acrylat-Kern/Mantel-Kautschuk im Verhältnis 40 Gew.-Teile : 60 Gew.-Teile (bezogen auf Polymerfeststoffgehalt) vermischt werden. Dazu werden 273 g Silicon-Acrylat-Kern-Mantel-Kautschukemulsion (Feststoffgehalt: 35,45 %) gut verrührt.

### Beispiel 4 bis 9

Die Durchführung der Beispiele 4 bis 6 bzw. 7 bis 9 erfolgt analog den Beispielen 1d) bis 3. Einzelheiten können aus der Tabelle 1 entnommen werden.

**Tabelle 1:**

| Beispiel Nr. | FKM-Emulsion aus Bsp. 1a [g] | S/A-K/M-Emulsion aus Bsp. 1c) [g] (Feststoff in % | Si-Anteile in S/A-K/M-Kautschuk [Gew.-%] | FKM / S/A-K/M-Verhältnis in der Mischung |
|---|---|---|---|---|
| 1d | 615,31 | 49,31 (35,45) | 70 | 90:10 |
| 2 | 410 | 169,25 (35,45) | 70 | 60:40 |
| 3 | 273 | 253,87 (35,35) | 70 | 40:60 |
| 4 | 615,31 | 48 (36,5) | 50 | 90:10 |
| 5 | 410 | 164 (35,5) | 50 | 60:40 |
| 6 | 273 | 246 (36,5) | 50 | 40:60 |
| 7 | 615,31 | 48,2 (36,4) | 30 | 90:10 |
| 8 | 410 | 165 (36,4) | 30 | 60:40 |
| 9 | 273 | 247 (36,4) | 30 | 40:60 |
| Abkürzungen: FKM = Fluorkautschuk; S/A-K/M = Silicon/Acrylat-Kern/Mantel-Kautschuk | | | | |

### Vulkanisation

Auf einem Zweiwalzen-Gummimischwalzwerk wurde ein Mischung aus 100 Gew.-Teilen Kautschukmischung (aus den Beispielen ld und 4 bis 9, die Produkte aus den Beispielen 2 und 3 ließen sich nicht verarbeiten) mit 3 Gew.-Teilen Calciumhydroxid, 30 Gew.-Teilen Ruß MT Black N 990, 4 Gew.-Teilen Percalink 301-50 (Triallylisocyanurat, 50%ig in inaktiven Füllstoffen) und 3 Gew.-Teilen Luperco 101 XL (2,5-Dimethyl-2,5-bis(tertiärbutyl)hexan, 45%ig in inaktiven Füllstoffen) hergestellt. Diese Mischung wurde 15 min bei 175°C mit 200 bar druckvulkanisiert. Danach folgte die Nachvulkanisation durch stufenweises Aufheizen der Formkörper (100 x 100 x 1 mm - Preßplatten) in einem Umluftofen innerhalb von 4 Stunden bei dieser Temperatur. Die Ergebnisse der mechanischen Untersuchungen dieser Vulkanisate sind in der Tabelle 2 zusammengefaßt (das Vulkanisat mit dem Produkt aus Beispiel 9 resultiert in einer spröden Platte).

**Tabelle 2**

| Beispiel Nr. | Vgl. | 1d | 4 | 5 | 6 | 7 | 8 | 9 |
|---|---|---|---|---|---|---|---|---|
| N/mm² bei 100% Dehnung | 4,24 | 4,97 | 5,15 | 7,52 | - | 5,12 | 7,52 | - |
| Bruchdehnung [%] | 430,2 | 386,8 | 419,3 | 132,1 | 93,2 | 466,8 | 145,6 | - |
| Bruchspannung [N/mm²] | 21,9 | 13,5 | 13 | 9 | 8,4 | 14,1 | 9,2 | - |
| T_{g} (1) [°C] | -17,9 | -17,8 | -16,7 | -18,1 | -16,4 | -16,1 | -17,4 | - |
| T_{g}(2) [°C] | - | -131,1 | -130,8 | -125,7 | -122,9 | -131 | -125,6 | - |

Die in Tabelle 2 angegebenen Glastemperaturen T_{g}(1) und T_{g}(2) wurden durch Aufnahme von Modulkurven im Brabender Torsionsschwingungsmessungsautomat ermittelt.

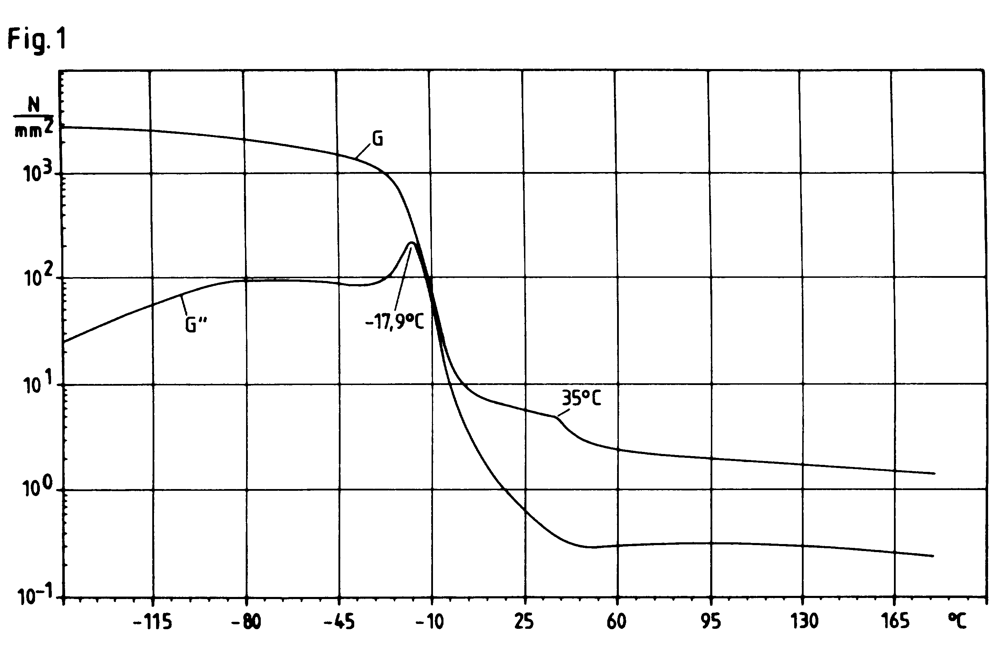

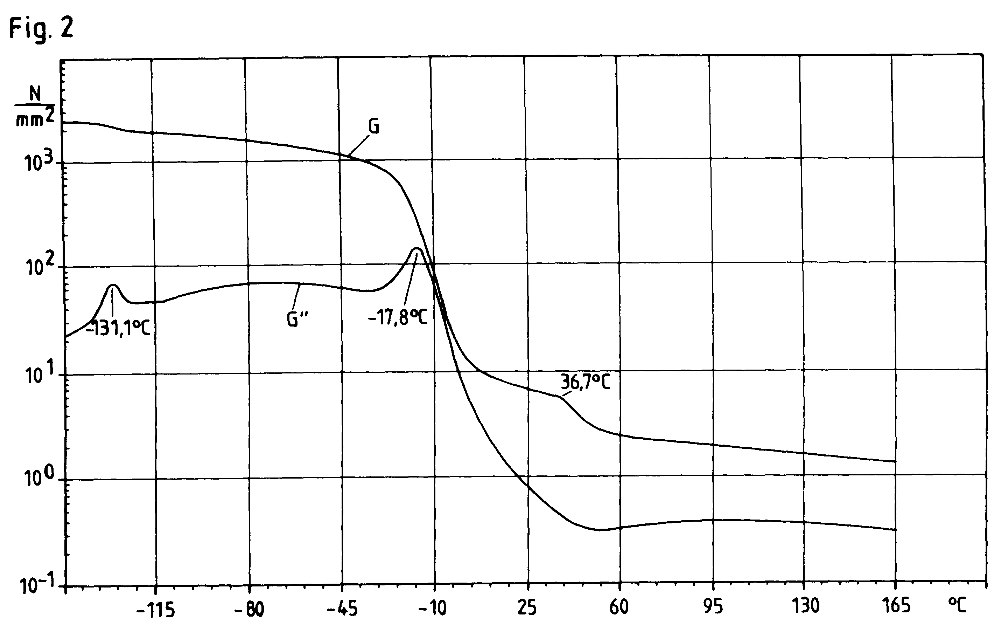

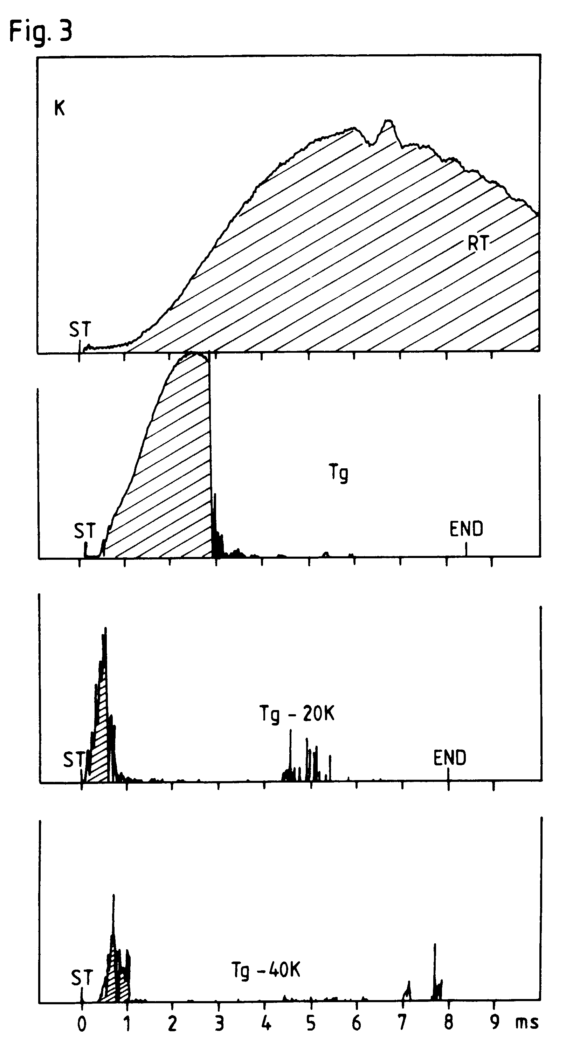

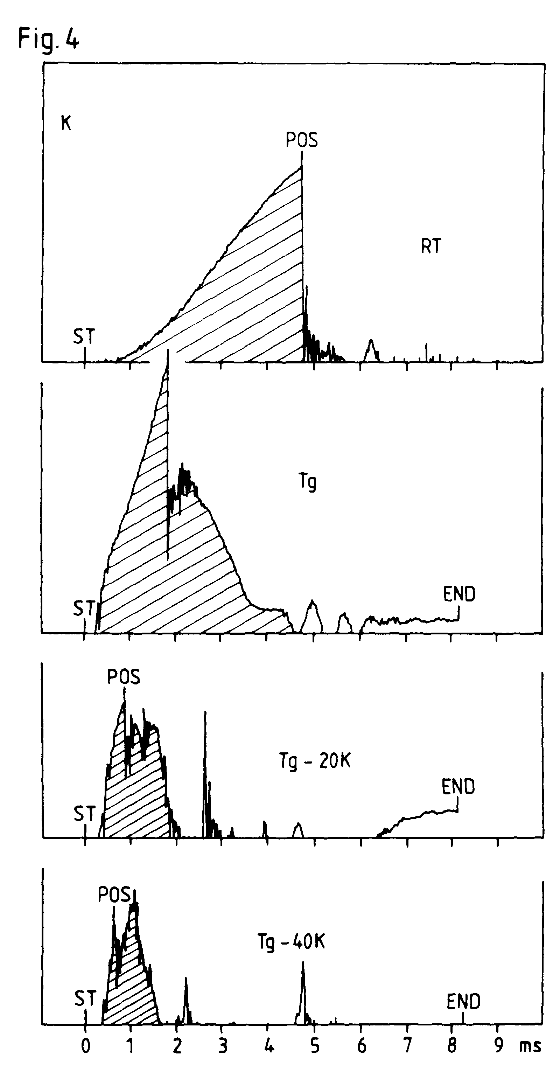

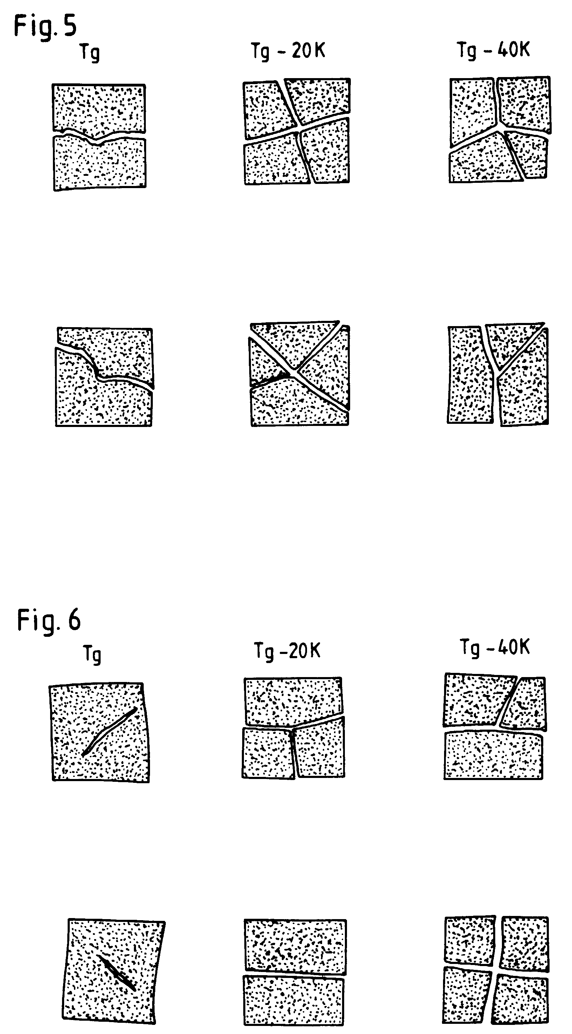

Die Fig. 1 und 2 zeigen beispielhaft Torsionsmodulkurven G und G'' in Abhängigkeit von der Temperatur für eine Probe gemäß Vergleichsbeispiel (Fig. 1) und Beispiel 1d (Fig. 2).

Die Kurven wurden bei einer Aufheizzeit von 1°C/min aufgenommen. Das Trägheitsmoment betrug 102,47 kg mm². Die Probe des Vergleichsbeispiels hatte eine Dicke von 1,12 mmm, die des Beispiels 1d von 1,23 mm.

Fig. 1 zeigt bei ca. -18°C den Glasübergang des Fluorpolymeren als peak der G''-Kurve.

Fig. 2 zeigt zusätzlich den Glasübergang der Siliconplatte bei -131°C. Üblicherweise liegt der Glasübergang der reinen Siliconphase bei ca. -120°C. Die Verschiebung zu tieferen Temperaturen deutet auf deutliche Ankopplungseffekte zwischen Acrylathülle und Fluorpolymermatrix hin.

Der Glasübergang der Fluorpolymermatrix liegt im wesentlichen unverändert bei ca. -18°C, weist allerdings eine leichte, asymmetrische Verbreiterung auf. Der Glasübergang der Acrylathüller verbirgt sich im G"-Untergrund im Bereich zwischen -35 und -45°C.

Die Verbesserung der Kältezähigkeit der erfindungsgemäß modifizierten Fluorkautschuke wird durch Plattendurchstoßversuche mit einer registrierenden Fallapparatur bestätigt.

## Patentansprüche

1. Vernetzbare Mischung aus
a) 98 bis 35 Gew.-Teilen eines peroxidisch vulkanisierbaren Fluorkautschuks, der Einheiten von Vinylidenfluorid und/oder Tetrafluorethylen und mindestens einem weiteren damit copolymerisierbaren Fluorolefin enthält, und
b) 2 bis 65 Gew.-Teilen eines Silicon/Acrylat-Kern/Mantel-Kautschuks mit einem Gelgehalt von >70 % und mit einem Siliconanteil bl) von 50 bis 95 Gew.-Teilen und einem Acrylatanteil b2) von 5 bis 50 Gew.-Teilen, wobei der Silicon/Acrylat-Kern/Mantel-Kautschuk teilchenförmige, vernetzte Siliconkautschukteilchen mit Gelgehalten von größer als 60 Gew.-% und einem mittleren Durchmesser von 0,1 bis 3 µm enthält, auf die der Acrylatkautschuk anteil aufpolymerisiert ist.

2. Mischung gemäß Anspruch 1, dadurch gekennzeichnet, daß der Bestandteil b2) zumindest teilverträglich mit dem als Blendpartner einzusetzenden FKM (Fluorelastomer) ist.

3. Mischung gemäß einem der Ansprüche 1 bis 2, dadurch gekennzeichnet, daß der Bestandteil b) einen Teilchendurchmesser von 60 bis 800 nm aufweisen.

4. Verfahren zur Herstellung der Mischung gemäß einem der Ansprüche 1 bis 3, dadurch gekennzeichnet, daß der Fluorkautschuk und der Silicon/Acrylat-Kern/Mantel-Kautschuk in Form wäßriger Dispersionen miteinander vermischt und aus der resultierenden Mischemulsion gemeinsam gefällt oder in dieser Form direkt als Beschichtungskomponente eingesetzt und jeweils in nachfolgenden Verarbeitungsschritten vernetzt werden.

## Claims

1. Crosslinkable mixture prepared from
a) 98 to 35 parts by weight of a peroxide vulcanisable fluororubber, which contains units of vinylidene fluoride and/or tetrafluoroethylene and at least one further fluoroolefin copolymerisable therewith, and
b) 2 to 65 parts by weight of a silicone/acrylate core/shell rubber having a gel content of > 70% and having a silicone fraction b1) of 59 to 95 parts by weight and an acrylate fraction b2) of 5 to 50 parts by weight, wherein the silicone/ acrylate core/shell rubber contains particulate, crosslinked silicone rubber particles having gel contents of greater than 60 wt.% and an average diameter of 0.1 to 3 µm, onto which the acrylate rubber fraction is polymerised.

2. Mixture according to claim 1, characterised in that constituent b2) is at least partially compatible with the FKM (fluoroelastomer) to be used as the blend partner.

3. Mixture according to one of claims 1 to 2, characterised in that constituent b) has a particle diameter of 60 to 800 nm.

4. Process for the production of the mixture according to one of claims 1 to 3, characterised in that the fluororubber and the silicone/acrylate core/shell rubber are mixed together in the form of aqueous dispersions and together precipitated from the resultant co-emulsion or used in this form directly as a coating component and, in either case, crosslinked in subsequent processing stages.

## Revendications

1. Mélange réticulable de
a) 98 à 35 parties en poids d'un caoutchouc fluoré apte à la vulcanisation sous l'action de peroxydes, qui contient des motifs de fluorure de vinylidène et/ou de tétrafluoréthylène et d'au moins une autre fluoroléfine copolymérisable avec ceux-ci, et
b) 2 à 65 parties en poids d'un caoutchouc de silicone/acrylate à noyau/enveloppe ayant une teneur en gel supérieure à 70% et une teneur en silicone b1) de 50 à 95 parties en poids avec une teneur en acrylate b2) de 5 à 50 parties en poids, le caoutchouc de silicone/acrylate à noyau/enveloppe contenant des particules de caoutchouc de silicone réticulées, à des teneurs en gel supérieures à 60% en poids et à un diamètre moyen de 0,1 à 3 µm, sur lesquelles la fraction de caoutchouc d'acrylate est polymérisée.

2. Mélange selon la revendication 1, caractérisé en ce que le constituant b2) est un élastomère fluoré compatible au moins en partie avec l'autre composant du mélange.

3. Mélange selon l'une des revendications 1 à 2, caractérisé en ce que le constituant b) a un diamètre de particule de 60 à 800 nm.

4. Procédé de préparation du mélange selon une des revendications 1 à 3, caractérisé en ce que l'on mélange le caoutchouc fluoré et le caoutchouc de silicone/acrylate à noyau/enveloppe sous la forme de dispersions aqueuses et à partir de l'émulsion mélangée, on les précipite ensemble ou bien on les utilise directement sous cette forme en tant que produit de revêtement et dans les deux cas, au cours des opérations suivantes, on réticule.
